(19) **Europäisches Patentamt European Patent Office Office européen des brevets**

(11) **EP 4 557 241 A1**

(12) **EUROPEAN PATENT APPLICATION**
published in accordance with Art. 153(4) EPC

(43) Date of publication:
21.05.2025 Bulletin 2025/21

(51) International Patent Classification (IPC):
*G06V 20/58* (2022.01)

(21) Application number: 23838705.4

(22) Date of filing: 29.06.2023

(86) International application number:
PCT/CN2023/103671

(87) International publication number:
WO 2024/012212 (18.01.2024 Gazette 2024/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.07.2022 CN 202210834108

(71) Applicant: Anhui NIO Autonomous Driving
Technology Co., Ltd.
Hefei, Anhui 230601 (CN)

(72) Inventors:
• XIONG, Qi
Shanghai 201804 (CN)
• PENG, Chao
Shanghai 201804 (CN)
• DENG, Haoping
Shanghai 201804 (CN)
• LIANG, Ji
Shanghai 201804 (CN)
• SUN, Lei
Shanghai 201804 (CN)
• REN, Shaoqing
Shanghai 201804 (CN)
• WU, Haibin
Shanghai 201804 (CN)

(74) Representative: Vossius & Partner
Patentanwälte Rechtsanwälte mbB
Siebertstrasse 3
81675 München (DE)

(54) **ENVIRONMENTAL PERCEPTION METHOD, DOMAIN CONTROLLER, STORAGE MEDIUM, AND VEHICLE**

(57) The invention relates to the field of autonomous driving technologies, and specifically provides an environmental perception method, a domain controller, a storage medium, and a vehicle, aiming to solve the technical problem of system time jumps caused by Coordinated Universal Time (UTC) in an existing autonomous driving system. There is provided an environmental perception method for autonomous driving, including: performing global time synchronization on a domain controller and sensors for autonomous driving based on global time information obtained from a navigation system during the process of fusing first target detection information corresponding to a camera, second target detection information corresponding to a LiDAR, positioning information, and third target detection information corresponding to a millimeter-wave radar, to obtain an environmental perception result, and performing relative time synchronization on the domain controller and the sensors for autonomous driving based on relative time information obtained from a local crystal oscillator when a jump in global time synchronization is detected. In this way, the stability of the system is improved, and safe driving is facilitated.

FIG. 1

## Description

The invention claims the priority to Chinese Patent Application No. CN 202210834108.5, filed on July 14, 2022, and entitled "ENVIRONMENTAL PERCEPTION METHOD, DOMAIN CONTROLLER, STORAGE MEDIUM, AND VEHICLE", which is incorporated herein by reference in its entirety.

## TECHNICAL FIELD

The invention relates to the field of autonomous driving technologies, and in particular, provides an environmental perception method, a domain controller, a storage medium, and a vehicle.

## BACKGROUND ART

Currently, in the field of autonomous driving, time synchronization between a domain controller and sensors is mainly implemented through a coordinated universal time (UTC) system. UTC is standard time. Since UTC undergoes global time correction and synchronization at a moment when GPS is active, a jump in system time may be caused, which is unacceptable for an autonomous driving system.

Accordingly, there is a need in the art for a new environmental perception method solution to solve the above problems.

## SUMMARY

To overcome the above disadvantages, the invention is provided to solve or at least partially solve the above technical problems. The invention provides an environmental perception method, a domain controller, a storage medium, and a vehicle.

In a first aspect, the invention provides an environmental perception method for autonomous driving, including: obtaining first target detection information based on image data from a camera; obtaining second target detection information based on point cloud data from a LiDAR; obtaining positioning information based on positioning data from a positioning sensor; obtaining third target detection information based on point cloud data from a millimeter-wave radar; and fusing the first target detection information, the second target detection information, the positioning information, and the third target detection information, to obtain an environmental perception result, where the camera, the LiDAR, the millimeter-wave radar, and the positioning sensor maintain time synchronization based on the following steps: performing global time synchronization based on global time information obtained from a navigation system; and performing relative time synchronization based on relative time information obtained from a local crystal oscillator when a jump in global time synchronization is detected.

In an implementation, the performing global time synchronization based on global time information obtained from a navigation system includes: sending a first timestamp to the camera, the LiDAR, the millimeter-wave radar, and the positioning sensor by using UTC through a network time protocol (NTP), to implement synchronization; and
the performing relative time synchronization based on relative time information obtained from a local crystal oscillator includes: sending a second timestamp to the camera, the LiDAR, the millimeter-wave radar, and the positioning sensor by using precision time protocol (PTP) through a generalized precision time protocol (gPTP), to implement synchronization.

In an implementation, the fusing the first target detection information, the second target detection information, the positioning information, and the third target detection information, to obtain an environmental perception result includes: inputting the first target detection information, the second target detection information, and relative positioning information into a first perception fusion model, to obtain first environmental perception information; and inputting the first environmental perception information, the third target detection information, the relative positioning information, and global positioning information into a second perception fusion model, to obtain second environmental perception information.

In an implementation, the obtaining first target detection information based on image data from a camera includes: inputting the image data from the camera into a first neural network, to obtain the first target detection information, where the first target detection information includes at least one of obstacle information, traffic sign information, ground information, oncoming vehicle light information, and lane line information, and the first neural network may be any one of a FasterRCNN algorithm, a YOLO algorithm, and a Mobilenet algorithm.

In an implementation, the second target detection information includes information of the target to be detected; and the obtaining second target detection information based on point cloud data from a LiDAR includes: performing target detection based on the point cloud data, to obtain an initial detection result, where the initial detection result includes at least one initial detection box corresponding to a target to be detected; determining a tracking speed of the initial detection box; and correcting the initial detection result based on the tracking speed, and a reflection intensity of point clouds in the initial detection box, to obtain the information of the target to be detected.

In an implementation, the second target detection information includes drivable area information; and the obtaining second target detection information based on point cloud data from a LiDAR includes: estimating a ground height of a current environment by using a convolutional neural network-based ground height estimation model and based on the point cloud data in the current environment; determining, based on the ground height, non-ground point clouds in the point cloud data that do not belong to the ground; performing obstacle detection on the non-ground point clouds, to obtain one or more obstacles; and determining a drivable area in a driving environment of a vehicle based on a position of the obstacle.

In an implementation, the first perception fusion model is configured on a first main control chip; and the second perception fusion model is configured on a second main control chip.

In a second aspect, there is provided a domain controller, including a main control chip. The main control chip includes at least one processor, and a storage apparatus configured to store a plurality of program codes, where the program codes are adapted to be loaded and executed by the at least one processor to perform the environmental perception method for autonomous driving.

In a third aspect, there is provided a computer-readable storage medium, storing a plurality of program codes, where the program codes are adapted to be loaded and executed by at least one processor to perform the environmental perception method for autonomous driving described in any one of the foregoing aspects.

In a fourth aspect, there is provided a vehicle, including the domain controller described above.

The one or more technical solutions of the invention described above have at least one or more of the following beneficial effects:

according to the environmental perception method for autonomous driving in the invention, during the process of fusing the first target detection information corresponding to the camera, the second target detection information corresponding to the LiDAR, the positioning information, and the third target detection information corresponding to the millimeter-wave radar, to obtain the environmental perception result, global time synchronization is performed on a domain controller and sensors for autonomous driving mainly based on the global time information obtained from the navigation system, and when a jump in global time synchronization is detected, relative time synchronization is performed on the domain controller and the sensors for autonomous driving based on the relative time information obtained from the local crystal oscillator. In this way, when a jump occurs in global time synchronization, time synchronization of the system can still be ensured, thereby improving the stability of the system, and facilitating safe driving of the vehicle.

## BRIEF DESCRIPTION OF THE DRAWINGS

The disclosed content of the invention will become more readily understood with reference to the accompanying drawings. Those skilled in the art readily understand that these accompanying drawings are merely for illustrative purposes and are not intended to limit the scope of protection of the invention. In addition, similar numbers in the figures are used to represent similar components, in which:

FIG. 1 is a schematic flowchart of main steps of an environmental perception method for autonomous driving according to an embodiment of the invention;
FIG. 2 is a schematic flowchart of complete steps of an environmental perception method for autonomous driving according to an embodiment of the invention;
FIG. 3 is a schematic diagram of a structure of implementing an environmental perception method for autonomous driving using two main control chips according to an embodiment of the invention; and
FIG. 4 is a schematic block diagram of a main structure of a main control chip according to an embodiment of the invention.

## DETAILED DESCRIPTION OF EMBODIMENTS

Some implementations of the invention are described below with reference to the accompanying drawings. Those skilled in the art should understand that these implementations are merely used to explain the technical principles of the invention, and are not intended to limit the scope of protection of the invention.

In the description of the invention, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

In the field of autonomous driving, system synchronization is mainly implemented through a global UTC system. UTC is standard time. Since UTC undergoes global time correction and synchronization at a moment when GPS is active, a jump in system time may be caused, which is unacceptable for an autonomous driving system.

For this reason, the invention provides an environmental perception method for autonomous driving. During the process of fusing first target detection information corresponding to a camera, second target detection information corresponding to a LiDAR, positioning information, and third target detection information corresponding to a millimeter-wave radar, to obtain an environmental perception result, global time synchronization is performed on a domain controller and sensors for autonomous driving mainly based on global time information obtained from a navigation system, and when a jump in global time synchronization is detected, relative time synchronization is performed on the domain controller and the sensors for autonomous driving based on relative time information obtained from a local crystal oscillator. In this way, when a jump occurs in global time synchronization, time synchronization of the system can still be ensured, thereby improving the stability of the system, and facilitating safe driving of the vehicle.

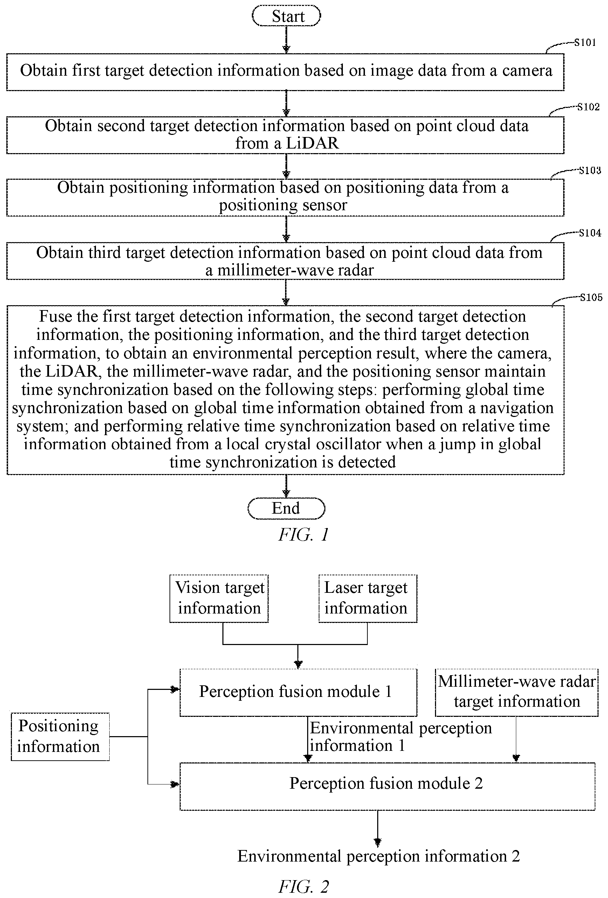

Referring to FIG. 1, which is a schematic flowchart of main steps of an environmental perception method for autonomous driving according to an embodiment of the invention.

As shown in FIG. 1, the environmental perception method for autonomous driving in this embodiment of the invention mainly includes step S 101 to step S105 below.

Step S101: Obtain first target detection information based on image data from a camera.

In a specific implementation, the obtaining first target detection information based on image data from a camera includes: inputting the image data from the camera into a first neural network, to obtain the first target detection information, where the first target detection information includes at least one of obstacle information, traffic sign information, ground information, oncoming vehicle light information, and lane line information.

For example, the first neural network may be any one of a FasterRCNN algorithm, a YOLO algorithm, and a Mobilenet algorithm.

Step S102: Obtain second target detection information based on point cloud data from a LiDAR, the second target detection information including information of target to be detected and drivable area information, where the information of target to be detected may be at least one of obstacle information, pedestrian, ground information, and lane line information.

Step S103: Obtain positioning information based on positioning data from a positioning sensor.

Specifically, positioning data from at least one of satellite navigation, an inertial navigation device and an odometer may be input into a positioning module, to obtain current pose information of an autonomous vehicle relative to an initial pose, and global pose information of the autonomous vehicle on a global map.

Step S104: Obtain third target detection information based on point cloud data from a millimeter-wave radar.

Specifically, the point cloud data from the millimeter-wave radar may be input into a third neural network, to obtain the third target detection information.

The third neural network may be any one of a PointPillars algorithm, and a CenterPoint algorithm.

Step S105: Fuse the first target detection information, the second target detection information, the positioning information, and the third target detection information, to obtain an environmental perception result, where the camera, the LiDAR, the millimeter-wave radar, and the positioning sensor maintain time synchronization based on the following steps:

performing global time synchronization based on global time information obtained from a navigation system; and
performing relative time synchronization based on relative time information obtained from a local crystal oscillator when a jump in global time synchronization is detected.

Specifically, UTC is standard time, and global time synchronization is performed on a domain controller and sensors for autonomous driving based on the global time information obtained from the navigation system GPS.

The performing relative time synchronization based on relative time information obtained from a local crystal oscillator includes: sending a second timestamp to the camera, the LiDAR, the millimeter-wave radar, and the positioning sensor by using PTP through a gPTP, to implement synchronization.

The PTP is auto-incrementing time. After being started, a PTP system measures time through an internal crystal oscillator, starting from a default reference moment (assumed to be 0). The sensors and the domain controller are triggered and synchronized through the gPTP.

Global time synchronization is performed on the domain controller and the sensors for autonomous driving based on the global time information obtained from the navigation system, and relative time synchronization is performed on the domain controller and the sensors for autonomous driving based on the relative time information obtained from the local crystal oscillator when a jump in global time synchronization is detected. In this way, when a jump occurs in global time synchronization, time synchronization of the system can still be ensured, thereby improving the stability of the system, and facilitating safe driving of the vehicle.

As shown in FIG. 2, the fusion of the first target detection information, the second target detection information, the positioning information, and the third target detection information in the invention is specifically implemented through hierarchical fusion. Specifically, the first target detection information corresponding to vision, the second target detection information corresponding to the LiDAR, and the positioning information are fused in a first perception fusion module, to obtain first environmental perception information. The first environmental perception information, the third target detection information corresponding to the millimeter-wave radar, and the positioning information are fused in a second perception fusion module, to obtain second environmental perception information.

In a specific implementation, the fusing the first target detection information, the second target detection information, the positioning information, and the third target detection information, to obtain an environmental perception result includes the following steps.

First, the first target detection information, the second target detection information, and relative positioning information are input into a first perception fusion model, to obtain the first environmental perception information.

Specifically, the first target detection information includes a two-dimensional bounding box for a detected target, and a first confidence value, and the second target detection information includes a candidate three-dimensional bounding box for the detected target, and a second confidence value. Specifically, during the process of fusing the first target detection information, the second target detection information, and the relative positioning information, first, a manual feature is constructed by using the first target detection information, the second target detection information, and the relative positioning information, and then, the manual feature is input into a late-fusion network to generate a new confidence value for the candidate three-dimensional bounding box, to obtain the first environmental perception information.

The constructing a manual feature by using the first target detection information, the second target detection information, and the relative positioning information includes: adding the first confidence value corresponding to the two-dimensional bounding box, and the second confidence value corresponding to the three-dimensional bounding box to the manual feature; projecting a three-dimensional bounding box corresponding to the LiDAR onto a camera image, to obtain a two-dimensional bounding box corresponding to the LiDAR; calculating a generalized intersection over union(GIoU) based on the two-dimensional bounding box corresponding to the LiDAR, and a two-dimensional bounding box corresponding to the camera, and adding the calculated GIoU to the manual feature; estimating a depth of a center point of a vehicle target based on the second target detection information, and adding the depth to the manual feature; and obtaining a distance from the three-dimensional bounding box to a center of the camera based on the relative positioning information, and adding the distance to the manual feature.

Specifically, for any two-dimensional detection boxes A1 and A2, first, a smallest bounding box A3 thereof is found, then, a ratio of A3/(A1 ∪ A2) to an area of A3 is calculated, and a ratio of an intersection over union (IoU) of the two-dimensional detection boxes A1 and A2 to A3 is used as a GIoU, i.e.,

$$GIoU = IoU - \frac{|A3/(A1 \cup A2)|}{|A3|}$$

a calculation formula for the depth $Z_i$ of the center point of the vehicle target is:

$$Z_i = \frac{fb}{x_1}$$

where $f$ is a focal length of the camera, b is a baseline length, and $x_1$ is a distance from a center point of the detection box to a center point of the image.

The late-fusion network is composed of one maximum pooling layer, and four one-dimensional convolutional networks, which are respectively Conv2D(4, 16, (1,1), 1), Conv2D(16, 32, (1,1), 1), Conv2D(32, 32, (1, 1), 1) and Conv2D(32, 1, (1,1), 1), where Conv2D(cin, cout, k, s) has the meaning of: cin and cout are numbers of input and output channels, respectively, k is a size of a convolution kernel, and s is a stride.

Then, the first environmental perception information, the third target detection information, the relative positioning information, and global positioning information are input into a second perception fusion model, to obtain the second environmental perception information.

During the process of fusing the first environmental perception information, the third target detection information, the relative positioning information, and the global positioning information, first, detection boxes for the first environmental perception information and the third target detection information are obtained, where the detection box is a smallest bounding box for the target.

Then, positions of targets in the first environmental perception information and the third target detection information, and trajectories and speeds of the targets are determined based on the relative positioning information and the global positioning information, and an IoU of detection boxes corresponding to two targets is calculated based on the positions.

Finally, it is determined whether the IoU, a trajectory similarity, and a speed similarity meet a preset condition, specifically, if the IoU is greater than an IoU threshold, the trajectory similarity is greater than a trajectory threshold, and the speed similarity is greater than a speed similarity threshold, it indicates that matching of the two targets is successful. In this case, information such as the position, speed, and heading angle of the target contained in the first environmental perception information is output as the second perception information.

If the preset condition is not met, it indicates that matching of the two targets is unsuccessful. Specifically, when an unsuccessfully matched target is a target in the first environmental perception information, information such as the position, speed, and heading angle of the target obtained from the first environmental perception information is output as specific information of the target. Specifically, when an unsuccessfully matched target is a target in the third target detection information, information such as the position, speed, and heading angle of the target obtained from the third target detection information is output as specific information of the target.

The first perception fusion model and the second perception fusion model may alternatively be implemented through other algorithms, and details are not described herein again.

In a specific implementation, the second target detection information includes information of target to be detected; and the obtaining second target detection information based on point cloud data from a LiDAR includes the following steps.

first, target detection is performed based on the point cloud data, to obtain an initial detection result, where the initial detection result includes at least one initial detection box corresponding to a target to be detected.

Specifically, target detection is performed by using a three-dimensional target detection network model and based on the point cloud data, to obtain the at least one initial detection box corresponding to the target to be detected, where the initial detection box is a three-dimensional initial detection box.

As an example, the three-dimensional target detection network model may include a PointPillar model, a VoxelNet model, or a CenterPoints model.

Then, a tracking speed of the initial detection box is determined.

Specifically, the initial detection box obtained in the above step is tracked, to obtain a displacement of the initial detection box in two frames of point cloud data separated by a preset number of frames, and a time interval of the two frames of point cloud data, and then the tracking speed of the initial detection box is determined based on the displacement and the time interval.

Finally, the initial detection result is corrected based on the tracking speed, and a reflection intensity of a point clouds in the initial detection box, to obtain the information of target to be detected.

Specifically, the point cloud data includes the reflection intensity of the point clouds. In this embodiment, a high-reflection-intensity points proportion of the initial detection box is determined based on a number of points whose reflection intensities are greater than a reflection intensity threshold in the initial detection box, and a total number of points of the point clouds in the initial detection box, and an initial detection box whose tracking speed is less than the speed threshold and whose high-reflection-intensity points proportion is greater than a high-reflection-intensity points proportion threshold is removed based on the tracking speed, the speed threshold, the high-reflection-intensity points proportion and the high-reflection-intensity points proportion threshold, to obtain the information of target to be detected.

The information of target to be detected may be obtained through the above method, so that the accuracy of the information of target to be detected is improved. Meanwhile, the second target detection information is obtained based on the point cloud data from the LiDAR, so as to provide foundational support for subsequent information fusion.

In a specific implementation, the second target detection information includes drivable area information; and the obtaining second target detection information based on point cloud data from a LiDAR includes the following steps.

First, a ground height of a current environment is estimated by using a convolutional neural network-based ground height estimation model and based on the point cloud data in the current environment.

Specifically, a point cloud space of a three-dimensional point cloud is rasterized by using the ground height estimation model, to form a plurality of three-dimensional point cloud grids, three-dimensional convolution features of multiple downsampling scales, and two-dimensional convolution features of multiple downsampling scales are extracted from three-dimensional point clouds in each point cloud grid, feature fusion is performed on the three-dimensional convolution features and the two-dimensional convolution features, to obtain point cloud grid features, and a ground height of a ground area where each point cloud grid is located is estimated based on the point cloud grid features of each point cloud grid.

During the process of extracting the three-dimensional convolution features of multiple downsampling scales, and the two-dimensional convolution features of multiple downsampling scales, first, a convolution operation is performed on a three-dimensional point cloud in each point cloud grid by using three-dimensional convolutions of multiple downsampling scales, to obtain three-dimensional convolution features of multiple downsampling scales for each point cloud grid, and then, the three-dimensional convolution features are converted into initial two-dimensional convolution features, and a convolution operation is performed on each initial two-dimensional convolution feature by using two-dimensional convolutions of multiple downsampling scales, to obtain final two-dimensional convolution features of multiple downsampling scales for each point cloud grid.

Then, non-ground point clouds in the point cloud data that do not belong to the ground are determined based on the ground height.

Specifically, first, a ground height of a ground area where a point cloud grid to which a current three-dimensional point cloud belongs is located may be determined, a preset compensation amount is added to the ground height, to form a new ground height, and then it is determined whether a point cloud height of the current three-dimensional point cloud is less than the new ground height; if the point cloud height of the current three-dimensional point cloud is less than the new ground height, the current three-dimensional point cloud is determined as a ground point cloud belonging to the ground; or if the point cloud height of the current three-dimensional point cloud is not less than the new ground height, the current three-dimensional point cloud is determined as a non-ground point cloud that does not belong to the ground.

Then, obstacle detection is performed on the non-ground point clouds, to obtain one or more obstacles.

Specifically, the non-ground point clouds may be clustered based on a point cloud spacing between three-dimensional point clouds, to obtain one or more point cloud clusters, and each point cloud cluster represents an obstacle. Information of an obstacle such as a position, a shape, and a height may be determined based on coordinates of the point cloud in the point cloud cluster.

It should be noted that in this embodiment, a conventional method in the field of obstacle detection technologies may be used to obtain information of each obstacle such as a position, a shape, and a height by using coordinates of the point cloud in the point cloud cluster. This is not specifically limited in this embodiment of the invention.

Finally, a drivable area in a driving environment of the vehicle is determined based on a position of an obstacle.

Specifically, first, a polar coordinate system corresponding to a three-dimensional coordinate system of the three-dimensional point clouds is established, a polar coordinate grid map is generated based on a preset number of fan-shaped grids, and the three-dimensional point clouds are projected to the polar coordinate grid map, a projection position of each obstacle is determined based on a projection position, on the polar coordinate grid map, of a three-dimensional point cloud corresponding to the obstacle, a distance between the vehicle and a nearest obstacle in each fan-shaped grid is calculated, and the drivable area in the driving environment of the vehicle is determined based on the distance.

The drivable area information may be obtained through the above method, so that the accuracy of the drivable area is improved. Meanwhile, the second target detection information is obtained based on the point cloud data from the LiDAR, so as to provide foundational support for subsequent information fusion.

In a specific implementation, the first perception fusion model is configured on a first main control chip; and the second perception fusion model is configured on a second main control chip.

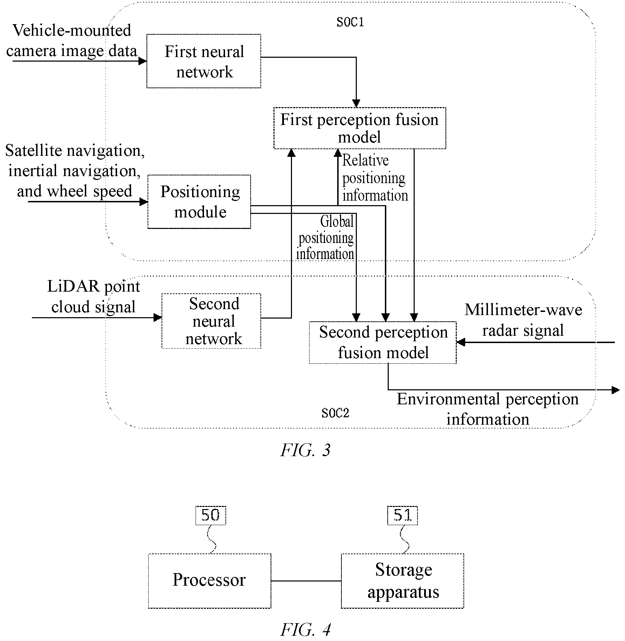

Specifically, as shown in FIG. 3, the first perception fusion model and the second perception fusion model are distributed on different system-on-chips (SOCs). Specifically, the first perception fusion model is configured on a system-on-chip (SOC1), and the second perception fusion model is configured on a system-on-chip (SOC2), where the SOC1 and SOC2 are located on different main control chips.

When the first main control chip and the second main control chip are both operational, the second environmental perception information output by the second main control chip is output as a final perception result.

When the first main control chip is operational, and the second main control chip is not operational, information output by the second main control chip is invalid information (null), the first environmental perception information is output as a final perception result.

Those skilled in the art may understand that all or some of the procedures in the methods in the above embodiments of the invention may be implemented by using a computer program instructing related hardware. The computer program may be stored in a computer-readable storage medium. When the computer program is executed by at least one processor, the steps in the above method embodiments may be implemented. The computer program includes computer program code, and the computer program code may be in the form of source code, object code, and an executable file, or in some intermediate forms, etc. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the invention further provides a domain controller, including a main control chip. In an embodiment of an electronic device according to the invention, as shown in FIG. 4, the main control chip includes a processor 50 and a storage apparatus 51. The storage apparatus may be configured to store a program for performing the environmental perception method for autonomous driving in the above method embodiment. The processor may be configured to execute a program in a storage apparatus. The program includes but is not limited to the program for performing the environmental perception method for autonomous driving in the above method embodiment. For ease of description, only parts related to the embodiments of the invention are shown. For specific technical details that are not disclosed, refer to the method part of the embodiments of the invention.

A whole vehicle includes a chassis domain, a vehicle body domain, a driving assistance domain, a powertrain domain, an infotainment domain, etc. A domain controller in the driving assistance domain includes hardware and software, where the hardware mainly includes a main control chip, a passive device such as a resistor and a capacitor, a bracket, a heat dissipation component, a sealed metal housing, and a PCB. The main control chip includes at least one of a microcontroller unit (MCU) chip and a SOC. The software mainly includes various algorithm models.

In a specific implementation, the domain controller includes a main control chip, where the main control chip is a MCU chip and/or a SOC.

Generally, an autonomous driving system includes a domain controller and a sensor unit, to meet the sensing requirements of autonomous driving for the environment surrounding the vehicle. The sensor unit usually includes a plurality of sensors, which include at least one of the following: a millimeter-wave radar sensor, a vision sensor, a LiDAR sensor, etc. The method provided in this embodiment of the invention allows for time synchronization between the domain controller and the plurality of sensors for autonomous driving in the autonomous driving system.

Further, the invention further provides a computer-readable storage medium. In an embodiment of the computer-readable storage medium according to the invention, the computer-readable storage medium may be configured to store a program for performing the environmental perception method for autonomous driving in the above method embodiment, and the program may be loaded and executed by at least oen processor to implement the environmental perception method for autonomous driving described above. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

Further, the invention further provides a vehicle, including the domain controller described above.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

**Claims**

1. An environmental perception method for autonomous driving, comprising:

obtaining first target detection information based on image data from a camera;
obtaining second target detection information based on point cloud data from a LiDAR;
obtaining positioning information based on positioning data from a positioning sensor;
obtaining third target detection information based on point cloud data from a millimeter-wave radar; and
fusing the first target detection information, the second target detection information, the positioning information, and the third target detection information, to obtain an environmental perception result, wherein
the camera, the LiDAR, the millimeter-wave radar, and the positioning sensor maintain time synchronization based on the following steps:

performing global time synchronization based on global time information obtained from a navigation system; and
performing relative time synchronization based on relative time information obtained from a local crystal oscillator when a jump in global time synchronization is detected.

2. The method according to claim 1, wherein

the performing global time synchronization based on global time information obtained from a navigation system comprises: sending a first timestamp to the camera, the LiDAR, the millimeter-wave radar, and the positioning sensor by using coordinated universal time (UTC) through a network time protocol (NTP), to implement synchronization; and
the performing relative time synchronization based on relative time information obtained from a local crystal oscillator comprises: sending a second timestamp to the camera, the LiDAR, the millimeter-wave radar, and the positioning sensor by using precision time protocol (PTP) through a generalized precision time protocol (gPTP), to implement synchronization.

3. The method according to claim 1, wherein the fusing the first target detection information, the second target detection information, the positioning information, and the third target detection information, to obtain an environmental perception result comprises:

inputting the first target detection information, the second target detection information, and relative positioning information into a first perception fusion model, to obtain first environmental perception information; and
inputting the first environmental perception information, the third target detection information, the relative positioning information, and global positioning information into a second perception fusion model, to obtain second environmental perception information.

4. The method according to claim 1, wherein the obtaining first target detection information based on image data from a camera comprises:

inputting the image data from the camera into a first neural network, to obtain the first target detection information, wherein the first target detection information comprises at least one of obstacle information, traffic sign information, ground information, oncoming vehicle light information, and lane line information, and the first neural network may be any one of a Faster RCNN algorithm, a YOLO algorithm, and a Mobilenet algorithm.

5. The method according to claim 1, wherein the second target detection information comprises to-be-detected target information; and the obtaining second target detection information based on point cloud data from a LiDAR comprises:

performing target detection based on the point cloud data, to obtain an initial detection result, wherein the initial detection result comprises at least one initial detection box corresponding to a target to be detected; determining a tracking speed of the initial detection box; and correcting the initial detection result based on the tracking speed, and a reflection intensity of a point cloud in the initial detection box, to obtain the to-be-detected target information.

6. The method according to claim 1, wherein the second target detection information comprises drivable area information; and the obtaining second target detection information based on point cloud data from a LiDAR comprises:

estimating a ground height of a current environment by using a convolutional neural network-based ground height estimation model and based on the point cloud data in the current environment; determining, based on the ground height, non-ground point clouds in the point cloud data that do not belong to the ground; performing obstacle detection on the non-ground point clouds, to obtain one or more obstacles; and determining a drivable area in a driving environment of a vehicle based on a position of the obstacle.

7. The method according to claim 3, wherein

the first perception fusion model is configured on a first main control chip; and the second perception fusion model is configured on a second main control chip.

8. A domain controller, comprising a main control chip, wherein the main control chip comprises at least one processor, and a storage apparatus configured to store a plurality of program codes, wherein the program codes are adapted to be loaded and executed by the at least one processor, to perform the environmental perception method for autonomous driving according to any one of claims 1 to 7.

9. A computer-readable storage medium storing a plurality of program codes, wherein the program codes are adapted to be loaded and executed by at least one processor, to perform the environmental perception method for autonomous driving according to any one of claims 1 to 7.

10. A vehicle, comprising the domain controller according to claim 8.

Start

Obtain first target detection information based on image data from a camera ⌐—S101

Obtain second target detection information based on point cloud data from a LiDAR ⌐—S102

Obtain positioning information based on positioning data from a positioning sensor ⌐—S103

Obtain third target detection information based on point cloud data from a millimeter-wave radar ⌐—S104

Fuse the first target detection information, the second target detection information, the positioning information, and the third target detection information, to obtain an environmental perception result, where the camera, the LiDAR, the millimeter-wave radar, and the positioning sensor maintain time synchronization based on the following steps: performing global time synchronization based on global time information obtained from a navigation system; and performing relative time synchronization based on relative time information obtained from a local crystal oscillator when a jump in global time synchronization is detected ⌐—S105

End

*FIG. 1*

Vision target information

Laser target information

Perception fusion module 1

Millimeter-wave radar target information

Positioning information

Environmental perception information 1

Perception fusion module 2

Environmental perception information 2

*FIG. 2*

FIG. 3

FIG. 4

## INTERNATIONAL SEARCH REPORT

| International application No. |
| --- |
| **PCT/CN2023/103671** |

| A. | CLASSIFICATION OF SUBJECT MATTER |
| --- | --- |

G06V20/58(2022.01)i

According to International Patent Classification (IPC) or to both national classification and IPC

| B. | FIELDS SEARCHED |
| --- | --- |

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

CNABS; CNTXT; DWPI; VEN; USTXT; EPTXT; WOTXT; CNKI; IEEE: 环境感知, 相机, 摄像头, 激光雷达, 毫米波雷达, 定位, 融合, 全局, 相对, 本地, 时间, 同步, 跳变, 无效, 稳定, environment sensing, camera, lidar, millimeter wave radar, localization, fusion, global, relative, local, time, synchronization, hopping, ineffective, stabilization

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115273027 A (ANHUI WEILAI ZHIJIA TECHNOLOGY CO., LTD.) 01 November 2022 (2022-11-01) claims 1-10, and description, paragraphs 4-93 | 1-10 |
| Y | CN 113002396 A (QINGDAO HUITUO INTELLIGENT MACHINE CO., LTD.) 22 June 2021 (2021-06-22) description, paragraphs 45-89 | 1-10 |
| Y | CN 111007554 A (WUHAN HI-CLOUD TECHNOLOGY CO., LTD.) 14 April 2020 (2020-04-14) description, paragraphs 65-113 | 1-10 |
| Y | CN 107655475 A (HENAN THINKER RAIL TRANSPORTATION RESEARCH INC.) 02 February 2018 (2018-02-02) description, paragraphs 46-122 | 1-10 |
| Y | CN 110794406 A (BEIJING JINGWEI HIRAIN TECHNOLOGIES CO., LTD.) 14 February 2020 (2020-02-14) description, paragraphs 31- 167 | 3, 5-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 September 2023** | **22 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 557 241 A1**

**INTERNATIONAL SEARCH REPORT**

| International application No. |
| --- |
| **PCT/CN2023/103671** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112212872 A (HEFEI UNIVERSITY OF TECHNOLOGY) 12 January 2021 (2021-01-12) entire document | 1-10 |
| A | US 2018356505 A1 (TOYOTA JIDOSHA KABUSHIKI KAISHA) 13 December 2018 (2018-12-13) entire document | 1-10 |

Form PCT/ISA/210 (second sheet) (July 2022)

13

**INTERNATIONAL SEARCH REPORT**
Information on patent family members

International application No.

**PCT/CN2023/103671**

| Patent document cited in search report | | | Publication date (day/month/year) | Patent family member(s) | | | Publication date (day/month/year) |
|---|---|---|---|---|---|---|---|
| CN | 115273027 | A | 01 November 2022 | None | | | |
| CN | 113002396 | A | 22 June 2021 | CN | 113002396 | B | 10 June 2022 |
| CN | 111007554 | A | 14 April 2020 | None | | | |
| CN | 107655475 | A | 02 February 2018 | None | | | |
| CN | 110794406 | A | 14 February 2020 | CN | 110794406 | B | 02 August 2022 |
| CN | 112212872 | A | 12 January 2021 | CN | 112212872 | B | 11 March 2022 |
| US | 2018356505 | A1 | 13 December 2018 | US | 10754017 | B2 | 25 August 2020 |
| | | | | JP | 2019003235 | A | 10 January 2019 |
| | | | | JP | 6816658 | B2 | 20 January 2021 |

Form PCT/ISA/210 (patent family annex) (July 2022)

**EP 4 557 241 A1**